# EUROPEAN PATENT APPLICATION

(11) **EP 3 298 888 A1**
(43) Date of publication of application: **28.03.2018**
(21) Application number: 17181549.1
(22) Date of filing: 14.07.2017
(51) Int. Cl.: A01K 63/04, C02F 1/00

(54) **FILTER FOR AQUARIUM WATER**

(30) Priority: 14.07.2016 PT 109534
(71) Applicant: Cianoaquarium, Lda, 4650-372 Revinhade (PT)
(72) Inventor: MANUEL FERNANDO, Martins Pedrosa, 4620-548 Santa Eulália Viz (PT)
(74) Representative: Patentree, Lda.

(57) **Abstract**

The present disclosure relates to an internal filter for freshwater aquariums, preferably up to 100L, more preferably between 40-80L, wherein the water circuit passing through the biological filtration is separated from the water circuit passing through the other filtrations (mechanical and chemical). Accordingly the filter has a body with a water inlet, a water outlet, a first pumped flow circuit for a mechanical treatment by a chemical treatment, a second flow circuit for a biological treatment, a separator for separating water flow from the inlet into two subflows for each of the first and second circuits, wherein the filter is configured for receiving a pump for pulling the first subflow from the chemical treatment circuit to the water outlet, wherein the outlet of the second circuit is connected to the inlet of the first circuit. This system can be applied in the small/medium size aquarium industry.

## Description

### Technical Field

The present disclosure relates to an internal filter for freshwater aquariums, preferably up to 100L, more preferably between 40-80L, wherein the water circuit passing through the biological filtration is separated from the water circuit passing through the other filtrations (mechanical and chemical).

This system/filter can be applied in the small/medium size aquarium industry.

### Background

Internal filters, particularly filters with mechanical, biological and chemical filtering capabilities are available in the market, whose filtering masses (cartridges) are passed through by a single flow of water. That is regardless of flow requirements of each filtering action, the water flow passing through the filtering masses is always the same. In fact, the internal filters available in the market with a volume range up to 80L privilege either mechanical filtration, or biological filtration, or chemical filtration, or, at most, two of these actions simultaneously, with greater or less water flow, but not the requirements of each filtering action, which forces the presence of at least two different water flows.

These facts are described in order to illustrate the technical problem solved by the embodiments of the present document.

### General Description

The present disclosure relates to an internal filter for freshwater aquariums, preferably up to 100L, more preferably between 40-80L, wherein the water circuit passing through the biological filtration is separated from the water circuit passing through the other filtrations (mechanical and chemical).

This system can be applied in the small/medium size aquarium industry.

In an embodiment of the present disclosure the mechanical filtration is thus fed by two sources of water: the main source, originating straight from the aquarium, and the secondary source in parallel, which has already previously passed through biological filtration.

In an embodiment, the water from these two sources, after passing through mechanical filtration, flows blended to the following filtration stage: chemical filtration. The water passing through the biological filtration chamber also originates, directly, from the aquarium.

In an embodiment, the filter aesthetic has been developed having the technical part of the filter been fully integrated in the interior of a decorative object typical of an aquarium, in this case a rock. Thus, it is not limited to applying aesthetics to a preconceived technical part but rather providing an idealized aesthetic integrated with a preconceived technical component, merging both components.

In an embodiment the aquarium filter described in the present disclosure, in addition to performing the same actions in terms of filtration components as the other existing internal filters, it allows in particular the optimization of the biological filtration component, by providing it with a water circuit with a downstream flow of up to 70% relative to the main water circuit that directly supplies the mechanical and chemical filtration components. This causes the water to remain longer in the biological filtration stage, where the action of the nitrifying and denitrifying bacteria should be more intense for enhancing the colonization and development of these same bacteria, without compromising the action in the remaining filtration stages, since the water flow in these stages does not change.

The present disclosure describes a filter for an aquarium comprising two water circuits, the circuit passing through the slower-acting biological filtration chamber being physically separated from the main circuit. The main circuit maintains its mechanical and chemical filtration characteristics, where the main source of the water to be filtered comes directly from the aquarium. The second source of water for the main circuit is that of the secondary circuit. This water from the secondary circuit is mixed and filtered into the mechanical filtration chamber, then flowing into the chemical filtration chamber.

In an embodiment, the possibility of increasing the distance between the water inlet and outlet of the filter optimizes the filtering actions of the filter. This distance, which could reach 50 cm, means an increase of about 60% when compared to existing internal filters already available in the market. The added value is that the water inlet in this filter is near the bottom of the aquarium and its outlet is as close as possible to the water level of the aquarium. The circulation of the water to be filtered with the filtered water is thus as wide-ranging as possible in relation to the inner volume of that aquarium. This is not the case with the filters in the market from the moment the aquarium height exceeds the height of the filter. This technical advantage is possible by choosing a decorative element that is at the bottom of the aquarium, in this case, a rock. Thus the water inlet is as close as possible to the bottom of the aquarium and the water outlet of the filter as close as possible to the water level of the aquarium.

In an embodiment, the chemical treatment can be done in a variety of ways, preferably by a column or mesh comprising activated carbon, activated alumina, zeolites (clinoptinolite), strong base anionic resins, activated resins (such as styrene and divinylbenzene), or mixtures thereof.

In an embodiment, the biological treatment can be done in a number of ways, preferably using a substrate suitable for the development of nitrifying or denitrifying bacteria, as for example pumice stone.

The present disclosure relates to a filter for aquarium water wherein the filter comprises:
a body with two water treatment circuits, a water inlet and a water outlet;
wherein said body comprises:
   a first pumped flow circuit for a mechanical treatment followed by a chemical treatment;
   a second laminar flow circuit for biological treatment;
   a separator for separating the water flow from the inlet into two subflows for each of the first and second circuits, respectively a first subflow and a second subflow, wherein the second subflow is about 1/5-1/3 of the water flow of the first subflow; and
   wherein the filter is configured for receiving a pump for pulling the first subflow from the chemical treatment circuit to the water outlet;
   wherein the outlet of the second circuit is connected to the inlet of the first circuit.

In an embodiment, the filter body may comprise channels formed in said grooved body for receiving cartridges with protrusions for fitting on said grooves.

In an embodiment, the filter herein disclosed may further comprise a grid in the inlet for separating detritus.

In an embodiment, the mechanical treatment may comprise: filtering sponges, net, or combinations thereof.

In an embodiment, the chemical treatment circuit may comprise: activated carbon, activated alumina, strong base anionic resin zeolites, activated resins, or combinations thereof.

In an embodiment, the biological treatment circuit may comprise a substrate for the development of nitrifying or denitrifying bacteria, in particular pumice stone.

In an embodiment, the filter herein disclosed may be configured so that the water inlet of the filter is at the base level of the aquarium.

In an embodiment, the filter herein disclosed may be configured so that the water outlet of the filter is at the water level of the aquarium.

In an embodiment, the water outlet or inlet of the filter herein disclosed may comprise a tube.

In an embodiment, the inlet or outlet of the tube may have a ring section for housing and fixing an electrical cable from the pump.

In an embodiment, the filter body may be of plastic, in particular ABS, PS, or mixtures thereof.

In an embodiment, the filter may have a flat lid for accessing to the interior of the filter, in particular with channels formed on said lid for fitting on the channels formed on the filter body.

In an embodiment, the filter herein disclosed may further comprise said pump coupled between the chemical treatment circuit and the water outlet.

The present disclosure also relates to an aquarium filtration system comprising a plurality of filters according to any previous claim.

The present disclosure further relates to an aquarium comprising the filter herein disclosed, in particular wherein the volume of the aquarium is between 40L-100L, preferably 80L.

### Brief Description of the Drawings

For an easier understanding, drawings are herein attached, which represent preferred embodiments which are not intended to limit the scope of the present disclosure.
**Figure 1****:** Schematic representation of an embodiment of the outer shape of the filter.
**Figure 2****:** Schematic representation of an embodiment of the technical configuration of the filter
   wherein (1) represents the water pump;
   wherein (2) represents the chemical treatment cartridges;
   wherein (3) represents the mechanical filtration cartridge;
   wherein (4) represents the water inlet grid;
   wherein (5) represents the biological treatment cartridges.
**Figure 3****:** Schematic representation of the positioning of the tube inside an aquarium, namely the filter leaning against the corner of the aquarium.
**Figure 4****:** Schematic representation of a form of access to the interior of the filter
   wherein (6) represents the lid opening by clips,
   wherein (7) represents a single filter lid.
**Figure 5****:** Schematic representation of the main circuit - passage of water through the mechanical filtration chamber.
**Figure 6****:** Schematic representation of the main circuit - passage of water through the chemical filtration chamber.
**Figure 7****:** Schematic representation of the main circuit - passage of water through the water pump chamber.
**Figure 8****:** Schematic representation of the main circuit (or first pumped flow circuit).
**Figure 9****:** Schematic representation of the secondary or parallel circuit (or second flow circuit).
**Figure 10****:** Schematic representation of the water circuit in the filter.
**Figure 11****:** Schematic representation of the illustration of the modular tube component assembly, the number of tubes and joints and the diameter thereof varies depending on the filter model
   wherein (8) represents a tube;
   wherein (9) represents the tube assembly at the rear outlet of the filter;
   wherein (10) represents a spray bar;
   wherein (11) represents the joints of the tubes;
   wherein (12) represents the tube extension;
   wherein (13) represents the water outlet at the front part of the filter.

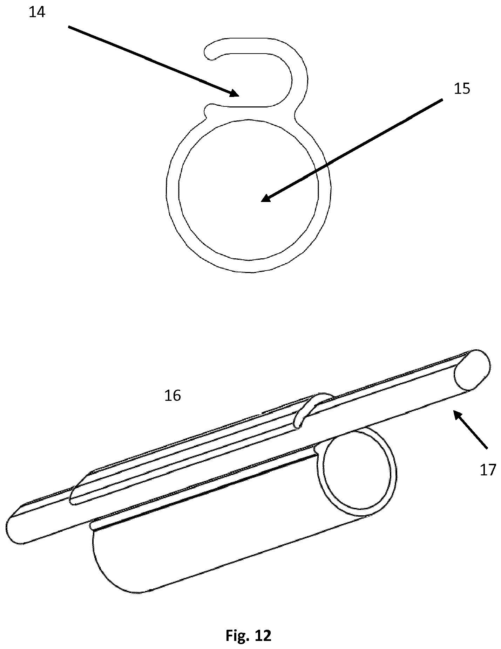

**Figure 12****:** Schematic representation of the pump cable retaining flap
   wherein (14) represents the cable retention flap;
   wherein (15) represents the passageway of the filtered water;
   wherein (16) represents the cable mounted on the tube;
   wherein (17) represents the cable.

### Detailed Description

The present disclosure relates to an internal filter for freshwater aquariums, preferably up to 80L, wherein the water circuit passing through the biological filtration is separated from the water circuit passing through the other filtrations (mechanical and chemical).

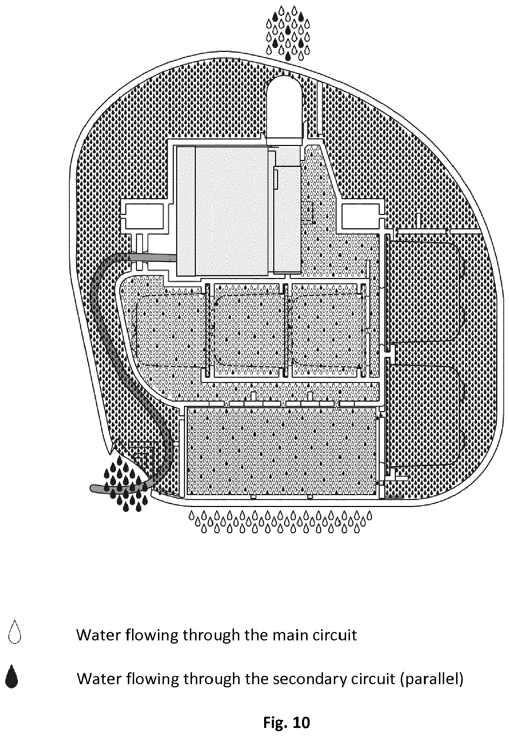

In an embodiment, the bacteria responsible for the biological filtration of the secondary circuit require a slower flow of water, creating a quieter enclosure (chamber), where the biologically acting filtering masses are present. This particularity allows the predisposition of these bacteria to fix in the therein existing filtering masses and colonize more intensively. Since this circuit is traversed by a flow of water, although very small, the bacteria that are reproduced in the biological filtration chamber are also carried to the rest of the aquatic environment, thus increasing the biological filtration range in the aquarium (Figure 10).

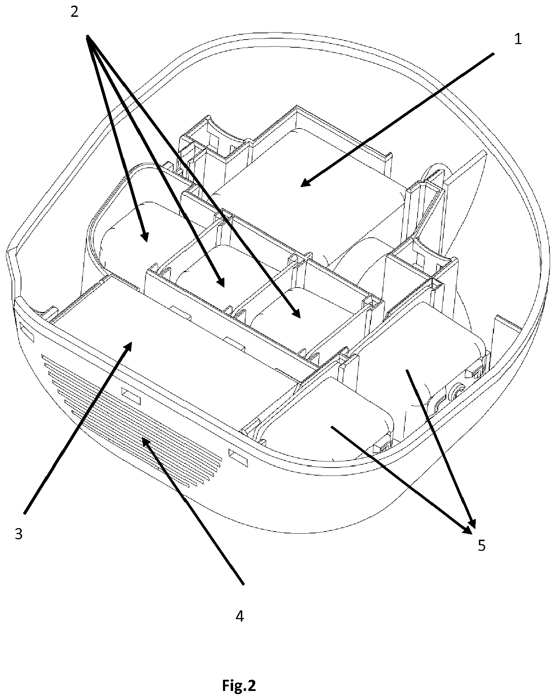

In an embodiment, the main circuit has a chamber for a mechanical filtration cartridge and a chamber for up to three chemical filtration cartridges (Figure 2). In the secondary (biological, slower flow) circuit, it has a chamber for up to two biological filtration cartridges (Figure 2). It thus has, in its totality, a capacity superior to filters existing in the market and for the same applicability.

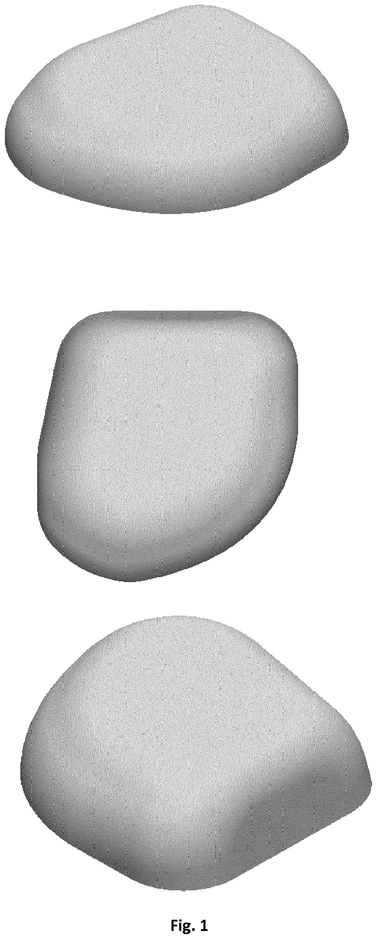

In an embodiment, the outer shape of the filter is based on a decorative element which is usuallu placed at the bottom of an aquarium: the rock (Figure 1). The rock is the element that can best house the existence of the two water circuits and that allows molding its shape to the necessary shape for the technical part that is required for this filter. It also allows, due to its volumetry and shape, simultaneous access to the entire interior of the filter. In addition, it gives the filter a decorative nature without having to resort to other pieces which, when coupled or together, provide decoration, because the pieces defining the technical part of this filter are decorative in themselves.

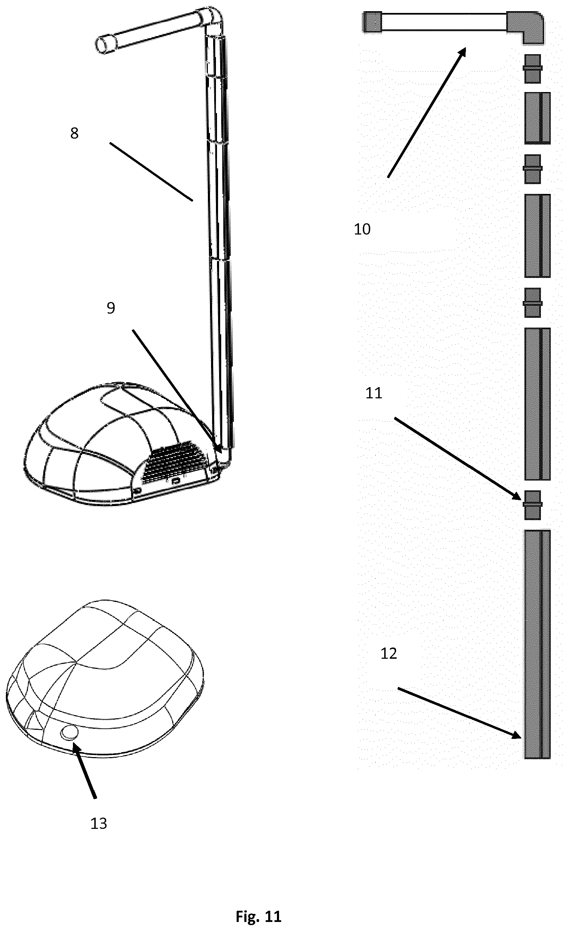

In an embodiment, the filter is equipped with two water outlets, one in front of the filter and the other in the back of the filter (Figure 11). The added value of this solution lies in the possibility of being able to use the filter in aquariums where the water level is low, while maintaining the principle of withdrawing as much as possible the inlet and outlet of water in the filter. In the market and in the field of operation of this filter, there is no product with two water outlets.

In an embodiment, the front or rear outlet of water can be equipped with a modular tube, comprising extensions (modules) of different lengths (Figure 11), which allow adapting the water outlet according to the height of the aquarium and thus withdrawing as much as possible the water outlet from the water inlet in the filter. Volumetry and height differ from aquarium to aquarium, so it is important that the filter is as wide-ranging as possible for all aquarium models and that the principle of withdrawing the water outlet from the water inlet as much as possible is maintained. These extensions (modules) are of different lengths, which allows for various extension configurations for increasing compatibility with different aquarium heights.

In an embodiment, the modular tube has a flap for housing and fixing the power supply cable of the filter water pump along that tube (Figure 12). The cable being embedded in this flap of the tube allows an improvement in the handling of the filter, and as well improves the aesthetics of the filter because the cable does not become loose and visible.

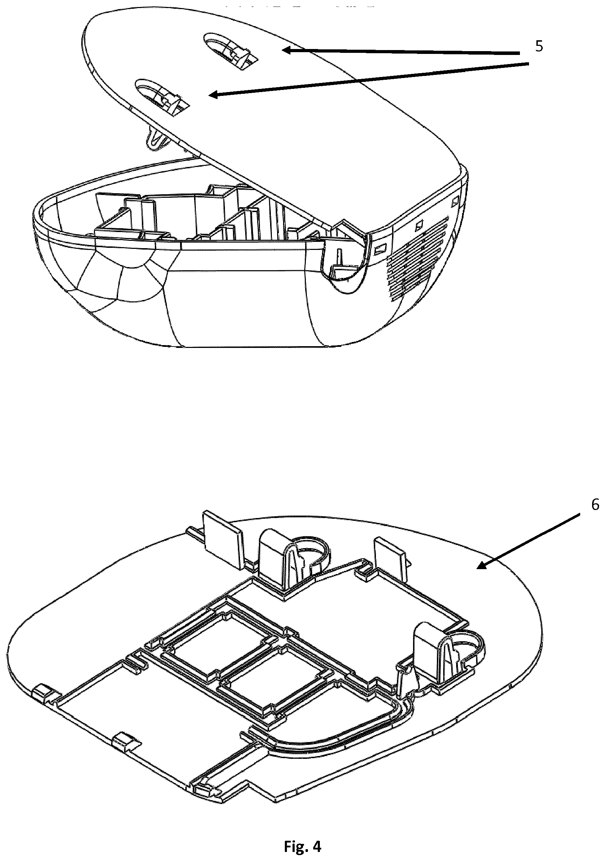

In an embodiment, the access to the entire interior technical zone of the filter is accomplished by a single lid, which is removed and placed manually, without tools (Figure 4). Unlike other filters available in the market, it is not necessary to remove the pump, any piece or any filtering mass to reach a specific element of the filter. By removing this lid, of easy assembling and disassembling through clips, simultaneous access to all components placed in the technical zone of the filter is obtained.

In an embodiment, the filter comprises a modular tube (see embodiment in Figure 11) which injects the filtered water very close to the maximum water height in the aquarium. This tube has smaller tubes (modules or extensions), which through joining pieces allow different tube sizes and, as such, the possibility of adapting to different water/aquarium heights. The extensions can be of different sizes increases the possibility of using the filter in aquariums of different sizes.

In an embodiment, the filter of the present disclosure may further comprise a biological filtering action optimized over existing ones as it allows, on the same filter, having a water flow passing through the biologically acting filtering masses slower than the main circuit, where the action of the mechanical and biological filtering masses continues to exist in this main circuit. This creates a calmer aquatic environment in the biological filtration chamber. This optimization allows, in a first phase, the high fixation and colonization of the nitrifying and denitrifying bacteria on the surface of the filtering matter contained in the consumable (filtering mass). These same bacteria (the most common are nitrobacter, which convert nitrite into nitrate, and nitrosomones, which convert ammonia into nitrite), which usually exist in all aquatic environments, either by human introduction or by other carriers, such as the introduction of fish from other aquatic environments or plants, will then feed on nutrients (ammonia in the case of nitrifying bacteria and nitrate in the case of denitrifying bacteria) present in the water to be filtered, which nutrients are pollutants to the aquatic environment and a result of the activity of the fish and plants contained in the aquarium. At the same time, the chamber where the action of biological filtration is located, not being a static space, but rather passed through by a flow of water although reduced, causes that same bacteria to be carried to the remaining aquatic environment, thus obtaining a biological filtering action superior to that existing in the other filters available in the market.

In conclusion, the main objective is to enhance the fixing and proliferation of these bacteria in biological filtration masses by thus reducing the amount of water passing therethrough, thus increasing their action. Subsequently and gradually, also their release to the remaining aquatic environment and the remaining mechanical and chemical filtering actions are not compromised.

In an embodiment, by providing the filter of the present disclosure with an independent water circuit with a lower flow dedicated solely to pass through the biological filtration masses allows the flow of water passing through the mechanical and chemical action masses to continue as high as possible, a situation which is desirable for these types of filtering action.

In an embodiment, the water flow passing through the mechanical and chemical action filtering masses is dependent only on the driving power of the circulation pump incorporated in the filter. Apart from this driving power, the flow passing through the biological filtration masses, due to the physical configuration of the filter, will always be lower, in this case up to 70% in relation to the flow of the main circuit. This characteristic is due to the fact that the water inlet in the main circuit coming directly from the aquarium is much larger in relation to the water inlet in the main circuit coming from the secondary circuit (circuit where only the biological filtration takes place).

In an embodiment, the existing internal filters have the limitation that, due to their design and shape, the water outlet is very close to the inlet when, in an aquarium of the size and volume of water adaptable to such filters, said water outlet and inlet should be as far apart as possible, especially when the aquarium is higher than the height of the filter. This makes water looping in the aquarium, that is, the path of filtered water and water to be filtered in the aquarium, being more restricted, not effectively ranging the entire volume of water contained in the aquarium.

In an embodiment, the filter of the present disclosure, for being equipped with a modularly extendable water outlet, allows it, when positioned at the bottom of the aquarium where water is fed, its outlet may be, practically, at the top of the aquarium, at the water level. This causes the filtering action of the filter to be more wide-ranging, as it generates water currents that further reach the peripheries of the water volume where water-polluting agents such as waste, dead organic matter, ammonia and other pollutants such as nitrites, nitrates, heavy metals, etc. are usually more concentrated. This range is possible because the filter is positioned at the bottom of the aquarium, disguised as a rock. The choice of a rock, as a decorative element of the bottom of the aquarium, is the object that best suits this purpose.

In an embodiment, the filter of the present disclosure, the modularity of the water outlet, due to the coupling of tubes of different lengths, allows the adaptation thereof to more than one aquarium height, always maintaining the greatest possible distance between the water inlet and outlet of the filter.

To enhance this action, the added value of the water outlet is made possible by one of two hypotheses in the filter, at the back or at the front thereof. It increases its ability to adapt to different aquarium shapes or user needs.

In an embodiment, the capacity of the number of filtering masses of the filter herein disclosed is higher than the capacity of the existing filters. In an embodiment, the filter of the present disclosure may operate simultaneously with a maximum of one mechanical filtering mass, two biological filtering masses and three chemical filtering masses, far exceeding the filtering mass capacity of the commercially available filters (for the same liters) and it does not require for a type of filtering mass to be sometimes removed in order to be able to start up another kind of filtering mass, thus leaving the filter devoid of the action from which it was removed, which diminishes its effectiveness. This situation is frequent and is solved with the present filter by the fact that it has a chamber particularly dedicated to biological filtration.

In an embodiment, the arrangement of the elements in the interior of the the filter herein disclosed (pump and cartridges) and the volumetry that an object such as a rock allows, without, however, generating disproportions or mismatches in the decoration of an aquarium, makes this filter, in terms of number of filtering mass capacity, the one with the largest capacity in the market. This greater capacity also allows reducing the number of interventions in the filter, since the replacement of the filtering masses is not as frequent.

In an embodiment, the filter of the present disclosure may allow access to all filtering masses and other components simultaneously. Since the physical configuration adopted in this filter allows all components inside the filter, including the filtering masses, to be accessible simultaneously during a maintenance intervention, the user, unlike with other existing filters, does not have to remove one or several components in order to have access to one or other components. By removing a lid, the user has access to the entire interior of the filter where all components are located. This improvement facilitates the intervening action on the filter, in terms of the necessary time and perception of the action needs therein, which action is continuous and often periodic, throughout the life of the filter in the aquarium.

In an embodiment, the filter of the present disclosure, unlike existing filters, where a decorative object serves as a camouflage for an existing internal filter, this filter has been designed from the outset with the concern directed to the technical part, which is the determining factor, while still allowing the water inlet and outlet of the filter to be as far apart as possible. Since it is at the bottom of the aquarium where the highest concentration of polluting substances is found, it is firstly defined that the inlet of water to be filtered must occur at the bottom of the aquarium. The decorative option for the filter should therefore be at the bottom of the aquarium. From what is usually placed at the bottom of the aquarium as decoration, the solution that best meets the technical requirement of this filter is the shape of a rock.

In an embodiment, the shape and exterior appearance of the filter was developed, having gathered the elements that normally constitute the interior decoration of a small-volume aquarium, in this case up to 80L. Usually small trunks, stones, imitations of constructions, etc., are found at the bottom of the aquarium. The main requirements when choosing the decorative object are the space for housing the technical component of the filter itself and the aesthetics most commonly observed among aquarists.

In the form of a rock, it is possible to house the water pump and the filtration components. Its entire interior is removed, leaving only a shell on the outside. In one embodiment, the decorative shape that best meets the technical requirements for the filter of the present disclosure is therefore the decorative rock (stone) and the defined shape is shown in Figure 1.

The next step is obtaining the desired arrangement of the components in its interior, so as to guarantee the independent water circuit for biological filtration without compromising the effectiveness of the action of the other filtration masses and without compromising the flow rate of the pump. The arrangement of the components is shown in figure 2, where the filter is equipped with a pump, a sponge (mechanical filtration), two biological filtration cartridges and three chemical filtration cartridges.

In one embodiment, the interior of the rock-shaped aquarium filter is maximized as a result without losing the external shape which characterizes it as a decorative element and which is best suited to the requirement of the technical component. Since the filter consists of pieces (shell and lid) obtained by injection of plastic, ABS or PS, different colors can be used in the filter, as close as possible to real rocks.

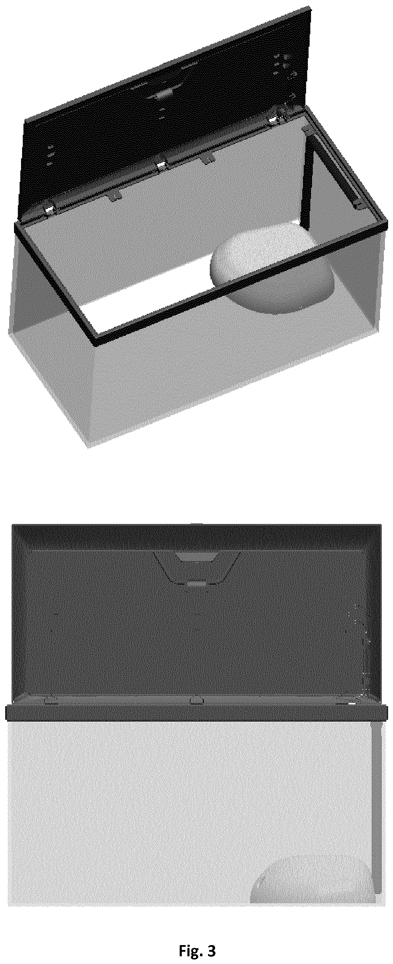

It is desirable for an internal filter to be positioned within an aquarium in order to cause the least visual impact. The important thing is actually the aquatic content of an aquarium and not what makes it work. As such, often the user positions a filter against an inner corner of the aquarium, either positioned at the back, or at one side. Since the power supply cable of the pump is currently unavoidable, the best way to camouflage it inside the aquarium is the reason for the analysis. To do this, the design of the rock assumes a shape that very smoothly adapts to a corner of the aquarium, thus making it possible for the power supply cable of the pump to be located near a corner of the aquarium (Figure 3).

In an embodiment, for better results, an access to the interior of the filter has been developed. All components inside the filter are arranged in the same geometric plane. The best and easiest way to access them is to use a lid (Figure 4) that ranges the entire technical area and which, being equipped with two spring clips, allows the lid to be removed and placed in a simple and practical way. It is therefore not necessary to remove any component in order to gain access to another, which simplifies maintenance of the filter.

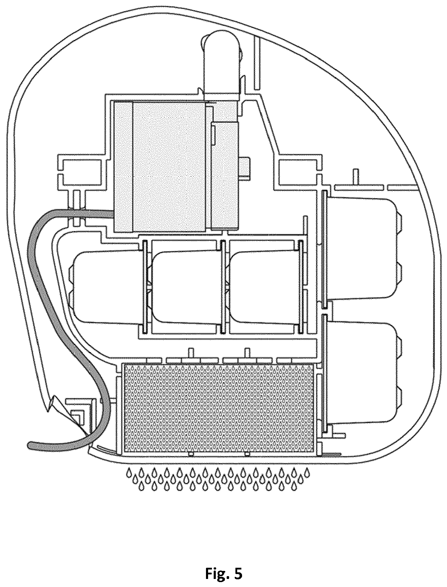

In an embodiment, a water circuit was developed inside the filter, where the filtering masses were placed and arranged, so as to make them profitable and without compromising the operation of the water pump, which circulates the water through the interior of the filter chambers. As a rule, the filtering masses are arranged sequentially. The first is the mechanical filtration (Figure 5), carried out by a sponge. It is in this sponge that the organic sediments of larger volume are retained, being prevented from entering the chemical filtration chamber. In order to enter the sponge chamber, the water passes through a grid sized to prevent the entry of small fish and other beings of small dimension. The sponge assumes a parallelepipedic shape. The area of incidence of water on the surface of the sponge should be as large as possible. To guarantee this, the sponge is lying in the assigned filter chamber, with one of its larger faces facing the water inlet grid. So being, the water crosses the sponge, thus making the most of its filtration area.

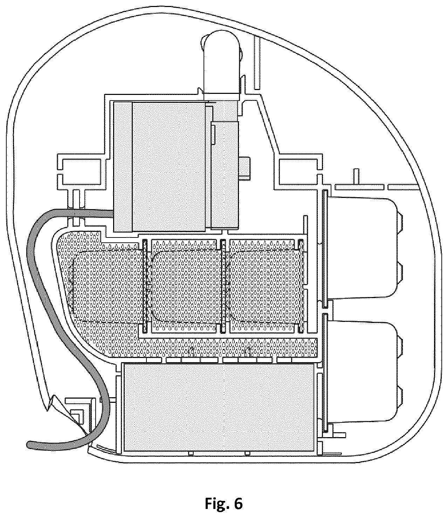

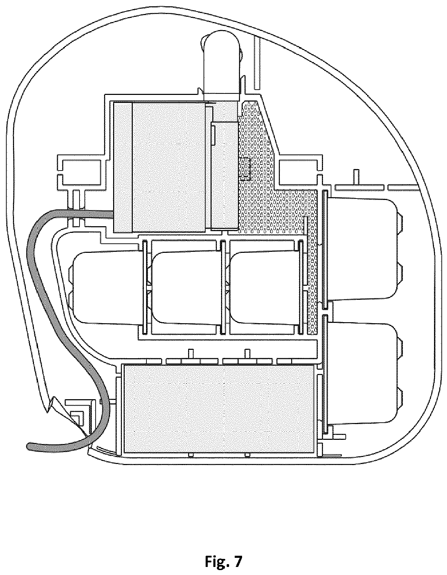

In an embodiment, after passing through the first stage (mechanical filtration), the water falls on the second filtering masses, responsible for the chemical filtration (Figure 6). This filter allows the placement of up to three chemical filtering action cartridges placed in series. When placed in series they allow for the water that circulates through them to obtain the maximum benefits of each, until the exhaustion of its filtration power. In addition, being placed in series, there is no obligation to place three cartridges at a time in the chamber, which is sometimes desirable by the user. On the contrary, if cartridges are placed in parallel, there could quickly be a predisposition for the water to circulate by one or several cartridges and not to pass through others, thus finding an easier way to circulate and that or those cartridges with no or little circulation would be undervalued. On the other hand, if the user wishes not to occupy the three chambers, that would imply that the chamber or chambers left without cartridge should mandatorily have to be obstructed to force the water through the others. The water thus filtered then enters the water pump chamber (Figure 7) to be pushed back into the aquarium.

In an embodiment, the main circuit, which feeds the water pump, being operative, the second part is of dimensioning and positioning the parallel circuit responsible for the biological filtration. It is desirable for the water to be filtered biologically not to have yet passed through the stage of chemical filtration. The reason behind this is as follows: usually chemical filtration is also responsible, depending on the function of the filtering mass, for the removal of ammonia, nitrites and nitrates, among others. As such, the filtering masses of these cartridges will saturate, reaching a point where they cease to be effective and need to be replaced. On the other hand, biological filtration is exclusively dedicated to transforming the same compounds (ammonia, nitrites and nitrates) into non-toxic or less toxic substances for the aquatic environment. It is also an auto-renewable filtration, because the bacteria existing in the filtering masses of these cartridges reproduce and also die. For this reason, the biological filtration must act before the chemical filtration, that is, leave for the chemical filtration the task that the biological filtration can no longer undertake, with regard to the removal of these components. Hence, the longevity attributed to biological filtration masses is, as a rule, much higher than the masses of chemical filtration which roughly reproduce the same result. In this way, the life of the chemical filtration masses is also extended, since they will not saturate as quickly.

In an embodiment, for the filter of the present disclosure, a chamber capable of placing two biological filtration masses, which is flooded with water from the aquarium and delivers it, after filtration, into the sponge can be sized following only then to the chemical filtration stage. The water inlet to the biological filtration chamber is guaranteed by a small grid lid placed on the back of the filter. This grid is present and is placed by the user in the case where the water outlet of the filter is made in the front part thereof. When the water outlet is made on the back of the filter, the water inlet is ensured by the remaining spacing between the filter lid and the water outlet curve.

In an embodiment, the sponge is fed by two water inlets: a larger inlet coming directly from the aquarium and the other coming from the biological filtration chamber. Only then will the water enter the last chamber: that of chemical filtration.

In one embodiment, in the secondary circuit (parallel) of the filter of the present disclosure, the fact that the water, for the most part, has to run through the periphery of the filter in order to enter the sponge chamber; the fact that the inlet of this water into the sponge chamber is much smaller than the main inlet (water inlet grid), causes that, by the suction action of the water pump, much more water comes from the main inlet as compared to the secondary inlet (from the biological filtration). A solution is thus created to decrease the flow rate of the water passing through the biological filtration chamber. In this way, the biological filtration chamber is less turbulent, it is a quieter water enclosure, which, given the more ideal conditions, and together with the substrate of the biological filtration masses, provides the fixing of the nitrifying and denitrifying bacteria in this chamber, the reproduction of these bacteria also being intense.

In an embodiment, the user may equip the chambers for chemical filtration masses with biological filtration masses and vice versa. A maximum chemical filtration with five cartridges or a maximum biological filtration with five cartridges can thus be achieved, although in the latter case all cartridges are not in the same water flow conditions.

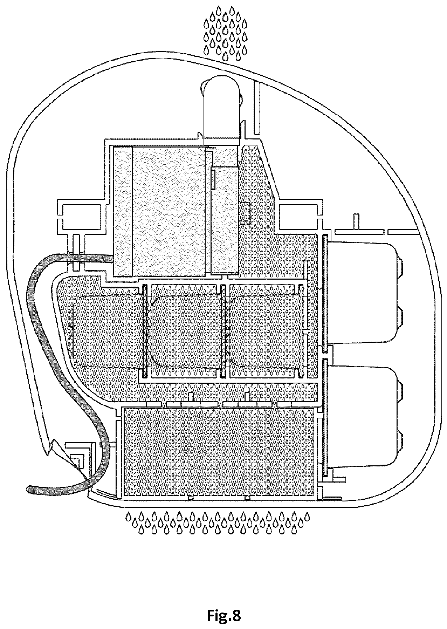

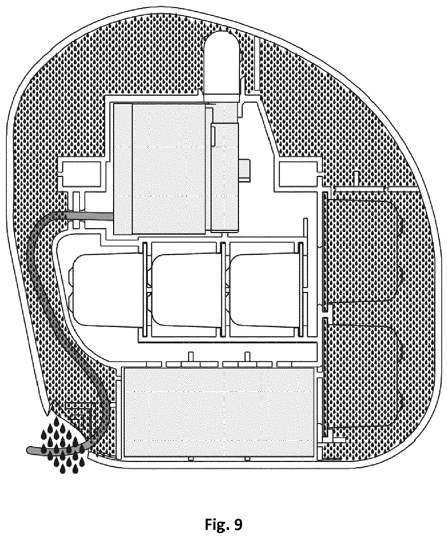

In an embodiment, tests have demonstrated that the amount of water passing through the biological filtration chamber is much lower, up to 70% less water, relative to the amount of water passing through the chemical filtration chambers. The amount of water at the outlet of this filter follows the average of the existing filters. In Figure 8, the entire water path through the main circuit is observed. The water comes from the water inlet grid of the filter and ends up in the water pump chamber to be injected back into the aquarium. The water path through the secondary circuit is shown in figure 9. This water, after passing through the biological filtration chamber, is then injected and mixed with the remaining water by the pump suction into the mechanical filtration chamber, and the water impelled by the pump in the aquarium is the result of the action of all types of filtration taking place in the filter at that time (Figure 10).

In an embodiment, a filter having a water outlet modularity has been developed. As this filter is located at the bottom of the aquarium, it is very important that the water outlet is as far apart as possible from the water inlet on the filter. A possible embodiment is by the use of a modular tube (Figure 11) which injects the filtered water very close to the maximum water height in the aquarium. This tube consists of smaller tubes (modules or extensions), which through joining pieces allow different tube sizes and, as such, the possibility of adapting to different water/aquarium heights. The fact that the extensions are all of different sizes increases the range to different aquariums.

In an embodiment, the modular tube can be mounted at the front water outlet of the filter or at the rear outlet, allowing it to be integrated into aquariums or terrariums, where water levels are usually low and as such the front outlet of the filter should be used, since it is the furthest from the water inlet in this configuration. In addition, and still in the case of terrariums, this filter, since being placed at the bottom, serves as a "dry zone" for tortoises, for example, making their sun exposure.

In an embodiment, the aesthetic part in the aquarium of the cable supplying the water pump of the filter is not left to chance. The modular tube has a flap (Figure 12) which allows housing and fixing the power supply cable of the water pump along the length of the tube, becoming integrated therein and being aesthetically no longer visible on the inside.

In an embodiment the mechanical/chemical treatment may comprise:
Granular activated carbon 8x30 mesh: adsorption of odors and yellowish color resulting from the accumulation of detritus in water;
Activated alumina 2-4 mm (Al₂O₃): phosphate adsorption - algae prevention;
Zeolites 1.5-2.5 mm (Clinoptinolite): adsorption of ammonia and other cationic substances;
Strong base anionic resins (CI- ionic form) - gel type: adsorption of stains and weak acids;
Strong base anionic resins (CI- ionic form) - macroporous type: adsorption of organic substances of small and medium dimension.

In an embodiment the chemical treatment may comprise:
Activated alumina 2-4 mm (Al₂O₃): phosphate adsorption - in higher amount to reduce the development of algae in the aquarium;
Zeolites 1.5-2.5 mm (Clinoptinolite): adsorption of ammonia and other cationic substances;
Strong base anionic resin selective to nitrate (CI- ionic form) - macroporous type: nitrate adsorption to reduce the development of algae in the aquarium. The resins may comprise two substances: styrene and divinylbenzene.

In an embodiment the biological treatment may comprise as substrate pumice stone with 2-4 mm dimensions: extremely porous volcanic rock and excellent for the development of nitrifying and denitrifying bacteria both on the surface and on its inside.

The present disclosure is of course in no way restricted to the embodiments herein described and a person of ordinary skill in the art will be able to provide many modification possibilities thereto and substitutions of technical features for equivalents, according to requirements in each situation, as defined in the appended claims.

The following claims define further embodiments of the present disclosure.

## Claims

1. A filter for aquarium water wherein the filter comprises:
a body with two water treatment circuits, a water inlet and a water outlet;
wherein said body comprises:
a first pumped flow circuit for a mechanical treatment followed by a chemical treatment;
a second laminar flow circuit for biological treatment;
a separator for separating the water flow from the inlet into two subflows for each of the first and second circuits, respectively a first subflow and a second subflow, wherein the second subflow is about 1/5-1/3 of the water flow of the first subflow; and
wherein the filter is configured for receiving a pump for pulling the first subflow from the chemical treatment circuit to the water outlet;
wherein the outlet of the second circuit is connected to the inlet of the first circuit.

2. Filter according to the previous claim, wherein the filter body comprises channels formed in said grooved body for receiving cartridges with protrusions for fitting on said grooves.

3. Filter according to any previous claim further comprising a grid in the inlet for separating detritus.

4. Aquarium filter according to any previous claim wherein the mechanical treatment comprises: filtering sponges, net, or combinations thereof.

5. Filter according to any of the previous claims wherein the chemical treatment circuit comprises: activated carbon, activated alumina, zeolites, strong base anionic resins, activated resins, or combinations thereof.

6. Filter according to the previous claims wherein the biological treatment circuit comprises a substrate for the development of nitrifying or denitrifying bacteria, in particular pumice stone.

7. Aquarium filter according to the previous claims wherein the filter is configured so that the water inlet of the filter is at the level of the aquarium base.

8. Aquarium filter according to the previous claims wherein the filter is configured so that the water outlet of the filter is at the water level of the aquarium.

9. Aquarium filter according to the previous claims wherein the water inlet or outlet comprises a tube.

10. Aquarium filter according to the previous claims wherein the inlet or outlet of the tube has a ring section for housing and fixing an electrical cable from the pump.

11. Aquarium filter according to the previous claims wherein the filter body is of plastic, in particular ABS, PS, or mixtures thereof.

12. Aquarium filter according to the previous claims wherein the filter has a flat lid for accessing to the interior of the filter, in particular with channels formed on said lid for fitting on the channels formed on the filter body.

13. Aquarium filter according to the previous claims further comprising said pump coupled between the chemical treatment circuit and the water outlet.

14. Aquarium filtration system comprising a plurality of filters according to any previous claim.

15. Aquarium comprising the filter of any of claims 1-13, in particular wherein the aquarium volume is between 40L-100L, preferably 80L.
